# EUROPÄISCHE PATENTSCHRIFT

(11) **EP 1 522 525 B1**
(45) Veröffentlichungstag und Bekanntmachung des Hinweises auf die Patenterteilung: **11.04.2007**
(21) Anmeldenummer: 04104931.3
(22) Anmeldetag: 08.10.2004
(51) Int. Cl.: C02F 1/42, E03F 5/16

(54) **Vorrichtung und Schacht zur dezentralen Behandlung von Wasser sowie Verfahren hierzu**
Device and shaft for the decentralised treatment of water and corresponding process
Dispositif et puits pour le traitement décentralisé de l'eau et procédé correspondant

(30) Priorität: 11.10.2003 DE 10347267; 02.09.2004 DE 102004042390
(43) Veröffentlichungstag der Anmeldung: 13.04.2005
(73) Patentinhaber: Hans Huber AG Maschinen- und Anlagenbau, D-92334 Berching (DE)
(72) Erfinder: Christ, Oliver, Dr., 80799 München (DE); Regnat, Winfried, 92334 Berching (DE); Helmreich, Brigitte, Dr., 85737 Ismaning (DE); Athanasiadis, Konstantionos, 85253 Erdweg (DE)
(74) Vertreter: Bergmeier, Werner

(56) Entgegenhaltungen:
- DE-A- 10 127 553
- NL-C- 1 018 789
- US-A- 5 820 762
- US-A1- 2001 035 371
- PICK V ET AL: "DEZENTRALE BEHANDLUNG DES NIEDERSCHLAGSABFLUSSES VON VERKEHRSFLAECHEN IN EINER MEHRSTUFIGEN SCHACHTANLAGE DECENTRALIZED TREATMENT OF STORMWATER RUNOFF FROM TRAFFIC AREAS IN A MULTI-STAGE SHAFT UNIT" KA - ABWASSER, ABFALL, GFA, HENNEF, DE, Bd. 49, Nr. 3, März 2002 (2002-03), Seiten 312-320, XP001143210 ISSN: 1616-430X
- KASTING U ET AL: "BODENFILTERANLAGEN ZUR REINIGUNG VON ABFLUESSEN STARK VERSCHMUTZTER VERKEHRSFLAECHEN AUSWAHL GEEIGNETER BODENSUBSTRATE SOIL FILTRATION PLANTS FOR THE TREATMENT OF EFFLUENTS FROM SEVERELY POLLUTED TRAFFIC AREAS" KA - ABWASSER, ABFALL, GFA, HENNEF, DE, Bd. 48, Nr. 9, September 2001 (2001-09), Seiten 1274-1276,1278, XP001161600 ISSN: 1616-430X

## Beschreibung

Die vorliegende Erfindung betrifft eine Vorrichtung, insbesondere einen Schachteinbau zur dezentralen Behandlung von Wasser, insbesondere von Regenwasser, welche zwei voneinander beabstandete, einen Hohlraum bildende Platten aufweist, wobei der Hohlraum zum Einbringen eines Ionenaustauschers und/oder adsorbierenden Materials vorgesehen ist, sowie einen entsprechenden Schacht und ein Verfahren zur Behandlung von Wasser, insbesondere zur Reduzierung von Schwermetallen in Wasser, insbesondere in Regenwasser aus Dachabläufen.

In den letzten Jahren wird vermehrt angestrebt, Dach- und Straßenabläufe vor Ort zu versickern. Jedoch ist in diesen Abläufen eine große Palette an Schadstoffen enthalten. Bei Metalldächern sind es Schwermetalle, bei Verkehrsflächen u.a. Schwermetalle, Öle und polyaromatische Kohlenwasserstoffe. Diese sind einerseits durch atmosphärische Einflüsse, größtenteils jedoch durch Berührung mit Dachoberflächen bei Metalldächern oder durch Verunreinigungen von Fahrbahnoberflächen verursacht durch Bremsen- und Reifenabrieb sowie Katalysatorausstoss verstärkt. Bei einer Versickerung in den Untergrund können solche Verunreinigungen irreversibel Auswirkungen auf den Boden und das Grundwasser haben. Von der Abwassertechnischen Vereinigung (ATV) und von den zuständigen Behörden der Länder werden Versickerungsanlagen mit belebter Bodenzone zur Reinigung der Abflüsse empfohlen. Bei unterirdischen Versickerungsanlagen wie Rigolen und Schächten können die Schadstoffe ohne ausreichenden Rückhalt direkt in das Grundwasser gelangen. Aufgrund der heute üblichen dichten Bebauung insbesondere in Ballungsgebieten steht für eine oberflächliche Versickerung über eine belebte Bodenzone nicht ausreichend Platz zur Verfügung oder es liegen Nutzungskonflikte vor, die den Bau oberirdischer Versickerungsanlagen verhindern.

Ist eine Oberflächenversickerung nicht möglich, bietet sich eine unterirdische Versickerung an. Ohne Entfernung der Schwermetalle aus den Abläufen von Metalldächern kann dies jedoch die Überschreitung der Richtwerte der Bundes-Bodenschutz- und Altlastenverordnung (BbodSchV) zur Folge haben und eine Kontamination von Boden und Grundwasser hervorrufen. In Deutschland gibt es derzeit nur wenige Anlagen, die zu einer Reduzierung der Schwermetalle aus Dachabläufen von Metalldächern führen. Eine solche Anlage ist beispielsweise eine Filteranlage mit einem Schachtbauwerk aus Betronringelementen. Bei der Filteranlage findet zunächst eine Sedimentation von Partikeln durch einen hydrodynamischen Abscheider statt. Über dem hydrodynamischen Abscheider befindet sich ein Filter aus haufwerksporigem Beton (Betonfilter) mit einem hohen CaCO₃-Anteil im Zement. Mit diesem Filter werden im Aufstromverfahren die Feinstoffe gefiltert und ein Großteil der gelösten Schwermetalle ausgefällt und adsorptiv gebunden. Dies geschieht über mehrstufige Betonfilter, die sich in der Ausbildung ihres Porenraumes unterscheiden.

Eine andere bekannte Anlage ist eine Sammelfilteranlage mit externem Schlammfang und einem Sammelfilter. Im Schlammfang sind Tauchwände im Zu- und Ablauf angeordnet, welche die Sedimentation von Partikeln ermöglichen. Der Sammelfilter ist mit einer Filterpatrone aus Kunststoff versehen, die auf einem Sockel mit speziellen Einlaufstutzen befestigt ist. Dieser Aufbau erlaubt eine Durchströmung des Filtermediums im Aufstromverfahren.

Die DE 101 27 553 A1 zeigt einen Filtereinsatz für einen Gullyschacht, der als Filterpatrone mit einem Überlauf ausgebildet ist. Die Filterpatrone besteht aus einer Patronenwandung und einer Bodenplatte und ist mit einem Gemisch aus mineralischen Stoffen mit chemischen Beimengungen befüllt. Hierdurch soll ein Straßeneinlauf geschaffen werden, bei dem feine und chemische Verunreinigungen zurückgehalten werden können.

Durch die US 5,820,762 wird ein Filtereinsatz für einen Gully beschrieben, der aus einem Gehäuse besteht, in dem mehrere. Filterbeutel übereinander angeordnet sind. Die erfindungsgemäße Ausgestaltung der Vorrichtung soll eine einfache Auswechslung einzelner Filterbeutel, deren Filterkapazität erschöpft ist, ermöglichen.

Die US 2001/0035371 A1 offenbart eine Vorrichtung zum Filtern von Dachabläufen. Die Vorrichtung ist dabei unter der Erdoberfläche mit einem vertikalen Ablaufrohr verbunden und dient zum Entfernen von Schwermetallen aus Dachabwässern, bevor diese ins Grundwasser gelangen oder auf sonstige Weise Wiederverwendung finden.

Pick, V. et al. beschreiben darüber hinaus eine "Dezentrale Behandlung des Niederschlagsabflusses von Verkehrsflächen in einer mehrstufigen Schachtanlage". Die verwendete Schachtanlage besteht hierbei aus einem Absetzschacht, der über einen Zulauf mit einem Filterschacht verbunden ist. In den Filterschacht sind zwei Kiesfilterschichten in Siebkörben sowie zwei Aktivkohleschichten eingebracht. Ziel der mit Hilfe der beschriebenen Anlage durchgeführten Untersuchungen war es, die Reinigungsleistung der Versuchsanlage für die maßgeblichen Belastungsparameter Schwermetalle und organische Stoffe zu ermitteln, Erfahrungen mit ihrem Betriebsverhalten zu sammeln und Hinweise auf planerische und betriebliche Optimierungsmöglichkeiten zu erhalten.

Nachteilig bei den bekannten Anlagen ist es, dass die Filter vor Ort nicht regenerierbar sind. Sie müssen in einer aufwendigen Prozedur ausgetauscht werden. Ein weitere Nachteil besteht darin, dass der Einsatz derartiger Anlagen den Neubau von Schachtbauwerken erfordert. Bestehende Sickerschächte können nicht nachgerüstet werden.

Aufgabe der vorliegenden Erfindung ist es somit eine dezentrale Behandlung von mechanisch vorgereinigten Dach- und Straßenabläufen zu realisieren und dabei die benötigte Vorrichtung in Standardschächte bzw. bestehende Sickerschächte einbauen zu können. Die Wartung der Vorrichtung soll dabei vor Ort durchführbar sein, um die Vielzahl der erforderlichen dezentralen Einrichtungen kostengünstig funktionsfähig zu halten.

Die Aufgabe wird erfindungsgemäß durch eine Vorrichtung, einen Schacht und ein Verfahren mit den Merkmalen der unabhängigen Ansprüche gelöst.

Eine erfindungsgemäße Vorrichtung zur dezentralen Behandlung von Wasser weist zwei voneinander beabstandete, einen Hohlraum bildende Platten auf. Der Hohlraum ist zum Einbringen eines Ionenaustauschers und/oder adsorbierenden Materials zur Reduzierung von Schwermetallen in dem Wasser vorgesehen. Die Platten bestehen aus mehreren Segmenten und sind beabstandet voneinander befestigt. Vorzugsweise ist die Vorrichtung zum Einbau in einen Schacht vorgesehen und dient zur dezentralen Behandlung von Regenwasser aus Dachabläufen oder Parkplatz- oder Straßenabläufen. Die erfindungsgemäße Vorrichtung ist zerlegbar und kann hierdurch in einen bestehenden Schacht eingeführt und innerhalb des Schachtes montiert werden. Ebenso ist das Befüllen der Vorrichtung mit einem körnigen lonenaustauscher und/oder einem adsorbierenden Material bei organischen Verunreinigungen innerhalb des Schachtes problemlos durchzuführen. Die Vorrichtung ist hierdurch universell einsetzbar und kann insbesondere ohne große Umbaumaßnahmen in bestehende Schächte eingesetzt und zur Behandlung von Wasser in Betrieb genommen werden. Das mit dem körnigen lonenaustauscher behandelte Wasser wird dabei von Schwermetallen gereinigt und kann anschließend beispielsweise durch Versickerung dem Grundwasser zugeführt werden. Wasserverunreinigungen, welche durch Ausspülungen von Zink- oder Kupferdächern, aber auch von Aluminiumdächern durch die Freisetzung von Schwermetallen entstehen, können hierdurch aus dem Wasser abgetrennt werden. Das so gereinigte Wasser kann anschließend in das Grundwasser eingeleitet, einer Regenwassernutzung zugeführt oder in einen Vorfluter eingeleitet werden.

Vorteilhafterweise sind die Platten mit einem Abstandhalter miteinander verbunden. Hierdurch wird der Hohlraum, welcher für den körnigen lonenaustauscher vorgesehen ist, gebildet. Die Platten bestehen aus einer unteren und einer oberen Platte. Durch den Abstandhalter wird die obere Platte nicht durch den Wasserdruck von dem Ionenaustauscher abgehoben, sondern behält einen definierten Abstand von der unteren Platte.

Ist wenigstens eine der Platten, vorzugsweise beide Platten als eine Siebplatte ausgebildet, so kann das zu reinigende oder gereinigte Wasser durch die Siebplatte in die Vorrichtung hinein- bzw. aus der Vorrichtung herausströmen. Die erfindungsgemäße Vorrichtung wird dabei insbesondere in orthogonaler Richtung der Platte durchströmt.

Ist die Platte auf einer Tragkonstruktion gelagert, so kann die Platte selbst relativ dünn ausgeführt werden und die Last des körnigen Ionenaustauschers trotzdem aufnehmen. Die Tragkonstruktion unterstützt dabei die Platte und erlaubt eine Befestigung der einzelnen Segmente an einer definierten Position der Vorrichtung und der einzelnen Segmente zueinander. Vorteilhafterweise sind die Segmente der Platte und die Tragkonstruktion miteinander verschraubt. Hierdurch ist die Montage der Vorrichtung innerhalb eines Schachtes schnell durchzuführen.

In einer besonders vorteilhaften Ausführung der Erfindung ist der Abstand der Platten einstellbar. Der Abstand der Platten entspricht vorteilhafterweise der Höhe des eingefüllten Ionenaustauschers und beträgt üblicherweise zwischen 50 und 100 cm. Die Menge des erforderlichen Ionenaustauschers ist insbesondere abhängig von der Dachfläche und der Regenmenge.

Vorteilhafterweise ist der Abstand der Platten durch unterschiedliche Abstandhalter, welche in der Vorrichtung verwendbar sind, einstellbar. Es kann aber auch eine stufenlose oder abgestufte Einstellung des Abstandes der Platten mit einem entsprechend gestalteten Abstandhalter erfolgen.

Um die erfindungsgemäße Vorrichtung in bestehende Schächte einbauen zu können, ist es besonders vorteilhaft, wenn der Durchmesser der Vorrichtung, und damit insbesondere der Durchmesser der Platten, im wesentlichen dem Durchmesser des für den Einbau vorgesehenen Schachtes entspricht. Die Schächte, welche häufig aus Betonringen zusammengesetzt sind oder monolithisch aufgebaut sind, weisen üblicherweise genormte Durchmesser auf. Ist die Vorrichtung nach diesen Schachtdurchmessern bemessen, so ist sie in einer Vielzahl von bestehenden oder selbstverständlich auch neu installierten Schächten einsetzbar.

Um sicherzustellen, dass das zu reinigende Wasser vollständig durch die erfindungsgemäße Vorrichtung strömt, ist vorteilhafterweise vorgesehen, dass die Vorrichtung in dem Schacht insbesondere mit Silikon seitlich abgedichtet ist. Zwischen Schacht und Vorrichtung besteht somit für das Wasser keine Möglichkeit an der erfindungsgemäßen Vorrichtung vorbei zu strömen und ungereinigt in das Grundwasser zu gelangen.

Ein Zeolith, insbesondere ein Klinoptilolith oder Chabasith/Phillipsit hat sich als Ionenaustauscher besonders vorteilhaft erwiesen. Ein derartiger lonenaustauscher erzielt hervorragende Ergebnisse beim Reinigen von Kupfer- oder Zinkdächern.

Ist die Vorrichtung durch ein Mannloch des Schachtes in den Schacht einführbar und daran zusammensetzbar, so ist eine Nachrüstung bestehender Abwasserschächte sehr einfach durchführbar. Erdbauarbeiten, um den Schacht zu öffnen und die Vorrichtung einsetzen zu können, sind hierdurch nicht erforderlich. Die Kosten und die Montagezeit werden hierdurch deutlich reduziert. Ein breiter Einsatz und eine Realisierung einer Vielzahl dezentraler Reinigungsvorrichtungen ist hierdurch möglich.

Um eine besonders gute Reinigung des Wassers zu erhalten und den Ionenaustauscher optimal zu nutzen, ist vorgesehen, dass die Vorrichtung in den Schacht derart eingebaut ist, dass sie im Aufstromverfahren durchströmt wird. Hierdurch wird das Wasser von unten nach oben durch die erfindungsgemäße Vorrichtung hindurchgeleitet. Ausgewaschene Verunreinigungen des Wassers fallen hierdurch nach unten und können aus dem Wasser und aus der Vorrichtung problemlos abgesondert werden.

Ein erfindungsgemäßer Schacht weist eine Vorrichtung mit den zuvor beschriebenen Merkmalen und Vorteilen auf. Erfindungsgemäß ist die Vorrichtung in dem Schacht seitlich abgedichtet angeordnet. Hierdurch wird sichergestellt, dass Wasser beim Durchströmen des Schachtes ausschliesslich durch die Vorrichtung strömt und das Wasser hierdurch vollständig gereinigt wird. Die Abdichtung der Vorrichtung in dem Schacht erfolgt beispielsweise durch Silikon, welches zwischen der Vorrichtung und dem Schacht angeordnet wird. Die Vorrichtung passt sich nahezu vollständig an den Schachtinnendurchmesser an, so dass das Silikon lediglich einen schmalen Spalt überbrücken muss. Die Abdichtung kann alternativ auch mittels Dichtringen, welche zwischen der Vorrichtung und dem Schachtinnenraum eingelegt werden, erfolgen.

Ist im oberen Bereich des Schachtes die Vorrichtung angeordnet, so ist eine Durchströmung der Vorrichtung im Aufstromverfahren ermöglicht. Das zu reinigende Wasser wird im unteren Bereich dem Schacht zugeführt und tritt von unten nach oben durch die Vorrichtung hindurch.

Vorteilhafterweise ist innerhalb des Schachtes und unter der Vorrichtung eine Absaugeinrichtung angeordnet. Die Absaugeinrichtung dient im Fall einer Regenerierung des Ionenaustauschers mit einer Regenerierflüssigkeit zum Absaugen dieser Regenerierflüssigkeit. Hierdurch wird verhindert, dass die Regenerierflüssigkeit in das gereinigte Wasser und damit in das Grundwasser gelangt. Daneben kann sie gegebenenfalls zur Entsorgung der abgetrennten Partikel verwendet werden.

Schächte weisen üblicherweise ein Mannloch auf, welches im Durchmesser gegenüber dem übrigen Schacht reduziert ist. Es dient zum Einstieg von Servicepersonal in den Schacht, um Inspektionen durchführen zu können. Die erfindungsgemäße Vorrichtung ist dabei so ausgeführt, dass sie durch das Mannloch des Schachtes in den Schacht eingeführt, in dem Schacht zusammengesetzt und mit dem Ionenaustauscher befüllt werden kann. Die Konstruktion der Vorrichtung ist daher auf die vorliegenden Maße des Schachtes bzw. des Mannloches in dem Schacht abgestimmt. Zum nachträglichen Einbau der Vorrichtung in den Schacht ist es daher nicht erforderlich den Schacht komplett zu öffnen. Umbaumaßnahmen an dem Schacht zum Einbau der Vorrichtung müssen nicht durchgeführt werden. Die Vorrichtung kann daher in übliche Schächte nachträglich eingebaut werden.

Um das gereinigte Wasser in den Untergrund bzw. in das Grundwasser einleiten zu können, ist an dem Schacht eine Ablaufvorrichtung zum Ablauf des gereinigten Wassers angeordnet. Die Ablaufvorrichtung kann eine Rigole sein. Es ist aber auch möglich und häufig sogar vorteilhafter, wenn das gereinigte Wasser direkt in das Grundwasser, ein Gewässer oder in einen Hauswasseranschluß eingeleitet wird.

In einem erfindungsgemäßen Verfahren wird Wasser insbesondere zur Reduzierung von Schwermetallen, welche sich beispielsweise in Regenwasser aus Dachabläufen befinden mit einer Vorrichtung und einem Schacht behandelt. Es wird dabei erfindungsgemäß ein Ionenaustauscher, welcher sich in der Vorrichtung in dem Schacht befindet, nach einer gewissen Gebrauchsdauer regeneriert, indem eine Regenerierflüssigkeit durch die Vorrichtung geströmt wird. Die Vorrichtung wird dabei nicht aus dem Schacht ausgebaut, sondern befindet sich während des Regenerierens weiterhin in dem Schacht. Durch das Durchströmen der Vorrichtung mit Regenerierflüssigkeit wird der Ionenaustauscher von den darin befindlichen sorbierten Schwermetallen gereinigt und steht anschliessend erneut für Reinigungsaufgaben von belastetem Wasser zur Verfügung. Die Regenerierung ist sehr einfach durchzuführen und kann daher ohne grossen Aufwand so häufig erfolgen, dass die Funktionsfähigkeit des Ionenaustauschers in vollem Umfang erhalten bleibt.

Besonders vorteilhaft ist es, wenn die Regenerierflüssigkeit von oben nach unten, d.h. entgegen der üblichen Fließrichtung des zu reinigenden Wassers durch die Vorrichtung geströmt wird. Hierdurch wird das durch die Regenerierflüssigkeit aus dem Ionenaustauscher ausgetauschte Schwermetall in den unteren Schachtbereich transportiert, in welchem sich nach der Regenerierung erneut das verunreinigte Wasser befindet. Es besteht somit zu keiner Zeit die Gefahr, dass Regenerierflüssigkeit den Weg des gereinigten Wassers in das Grundwasser geht.

Vorteilhafterweise wird Regenerierflüssigkeit unterhalb der Vorrichtung in dem Schacht abgesaugt. Die Regenerierflüssigkeit kann nach dem Absaugen erneut von oben nach unten durch die Vorrichtung geströmt werden. Sie ist mehrfach einsetzbar und hierdurch der Ionenaustauscher besonders kostengünstig zu reinigen. Selbstverständlich kann bei jedem Reinigungsvorgang auch eine neue oder gereinigte Regenerierflüssigkeit verwendet werden, um den Reinigungsvorgang noch effektiver zu gestalten. Als Regenerierflüssigkeit hat sich insbesondere eine Kochsalzlösung als vorteilhaft wiesen. Eine Kochsalzlösung ist kostengünstig und ermöglicht eine sehr effektive Reinigung des Ionenaustauschers.

Wird zum Regenerieren des Ionenaustauschers Regenerierflüssigkeit mehrmals, insbesondere zwei- bis dreimal durch die Vorrichtung geströmt, so wird eine hervorragende Reinigung des Ionenaustauschers erzielt. Die Regenerierflüssigkeit ist dabei vorteilhafterweise stets zu erneuern um die Aufnahmefähigkeit für die Schwermetallionen zu gewährleisten. Der lonenaustauscher kann schließlich auch noch mit klarem Wasser gespült werden, um ihn von Rückständen zu reinigen.

Weitere Vorteile der Erfindung sind in den nachfolgenden Ausführungsbeispielen beschrieben. Es zeigt
- **Figur 1**: eine schematische Darstellung eines erfindungsgemäßen Schachtes mit einer Reinigungsvorrichtung und
- **Figur 2**: eine perspektivische Darstellung einer erfindungsgemäßen Reinigungsvorrichtung.

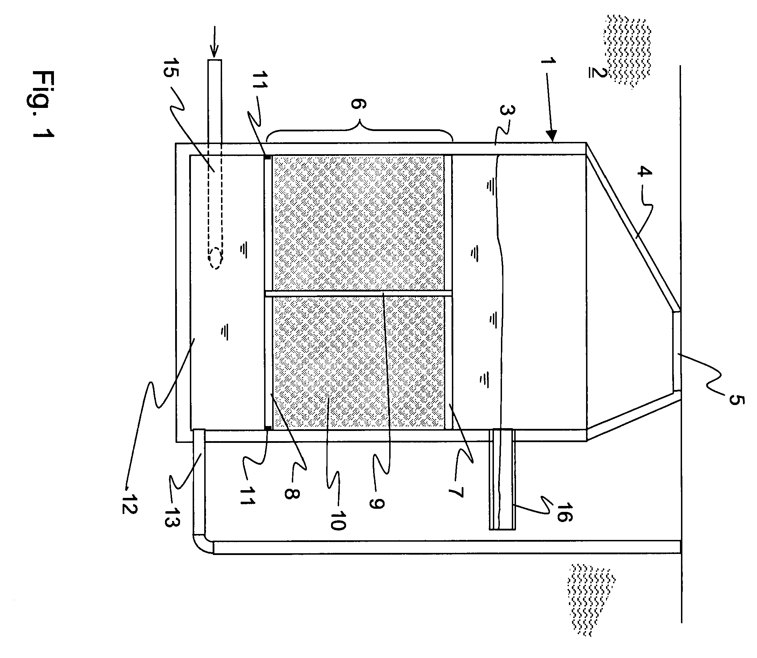

In Figur 1 ist ein Schacht 1 schematisch dargestellt. Der Schacht 1 besteht beispielsweise aus Betonringen, welche übereinandergestapelt sind oder aus einem monolithisch hergestellten Schacht und befindet sich vollständig im Boden 2. Für eine zuverlässige Reinigung des gesamten zufließenden Wassers muß der Schacht 2 nach außen wasserdicht sein. Während der eigentliche Schachtbereich in dem vorliegenden Ausführungsbeispiel aus zylindrischen Ringsegmenten 3 besteht, ist der Abschluß des Schachtes aus einem konischen Ringsegment 4 gebildet. Das konische Ringsegment 4 weist an seinem einen Ende ein Mannloch 5 auf, welches üblicherweise mit einem Deckel verschlossen ist, bei Bedarf jedoch zum Einstieg von Servicepersonal geöffnet werden kann.

In dem Schacht 1 ist eine vorzugsweise aus Edelstahl hergestellte Reinigungsvorrichtung 6 angeordnet. Die Reinigungsvorrichtung 6 besteht aus einer oberen Siebplatte 7 und einer unteren Siebplatte 8. Die beiden Siebplatten 7, 8 sind mit einem Abstandhalter 9 miteinander verbunden. Zwischen den Siebplatten 7 und 8 ist ein körniger Ionenaustauscher 10 angeordnet. Der Ionenaustauscher 10 ist ein Zeolith, insbesondere ein Klinoptilolith oder ein Chabasith/Phillipsit. Das Material des Ionenaustauschers ist in definierten Körnungen, beispielsweise größer 0,7 mm zwischen den Siebplatten 7 und 8 eingefüllt. Vor dem Einsatz des Ionenaustauschers wird dieser beispielsweise mit einer Natriumchlorid-Lösung vorbehandelt. Hierdurch wird die lonenaustauschkapazität für Schwermetallionen, wie beispielsweise Zink, Kupfer oder Blei erhöht. Die Vorbehandlung kann vor dem Einfüllen in die Reinigungsvorrichtung erfolgen. Der Ionenaustauscher wird hierfür mit der NaCI-Lösung gespült.

Die Reinigungsvorrichtung 6 ist gegenüber dem Schacht 1 mittels einer Dichtung 11 abgedichtet. Es kann sich dabei um einen Silikonstreifen handeln, der in den Zwischenrum zwischen der Vorrichtung 6 und dem Schacht 1 eingespritzt wurde oder beispielsweise auch um einen Dichtring, der bei der Montage zwischen die Reinigungsvorrichtung 6 und dem Schacht eingebaut wurde..

Üblich ist eine Höhe der Vorrichtung 6 von etwa 50 bis 100 cm bei einem Durchmesser des Schachtes 1 von etwa ebenfalls 100 cm. Besonders vorteilhaft bei dieser Reinigungsvorrichtung 6 ist es, dass der gesamte Querschnitt des Schachtes 1 für die Reinigung des Wassers zur Verfügung steht.

Unterhalb der Reinigungsvorrichtung 6 ist bei dem vorliegenden Ausführungsbeispiel eine schematisch dargestellte Abtrenneinheit 12 angeordnet. In der Abtrenneinheit 12 sammeln sich Partikel an. Aus der Abtrenneinheit 12 können sie mit einer Absaugeinrichtung, beispielsweise einer Vakuumpumpe, welche mit einem Absaugrohr 13 verbunden ist, aus der Abtrenneinheit 12 entnommen werden. Im normalen Betrieb ist das Absaugrohr 13 abgeschlossen.

Das Absaugrohr 13 dient gemäß der vorliegenden Erfindung hauptsächlich auch zur Durchführung eines Regenerationsvorganges des lonenaustauschers 10. Regenerationsflüssigkeit wird hierfür von oben durch die Reinigungsvorrichtung 6 hindurch geströmt und macht den Ionenaustauscher wieder aufnahmefähig für Schwermetallionen. Die Regenerationsflüssigkeit und evtl. eine Spülflüssigkeit, z.B. klares Wasser, werden durch das Absaugrohr 13 aus dem Schacht 1 abgesaugt und können separat entsorgt werden. Hierdurch wird einer der wesentlichen Vorteile der Erfindung erzielt, dass die Regenerierung der Reinigungsvorrichtung 6 innerhalb des Schachtes 1 erfolgen kann, ohne diese vorher aus dem Schacht 1 entnehmen zu müssen.

In die Abtrenneinheit 12 ist ein Zuführrohr 15 integriert. Über das Zuführrohr 15 wird das Abwasser dem Schacht 1 und der Reinigungsvorrichtung 6 zugeleitet. Das Zuführrohr 15 mündet tangential in die Abtrenneinheit 12. Da die Filteranlage bei starken Regenereignissen oberhalb der Bemessungsregens hydraulisch versagen könnte, ist ein nicht dargestellter Notüberlauf häufig vorgesehen, so dass das Wasser direkt in eine Rigole bzw. einen Wasserablauf 16 gelangen kann.

Das über das Zuführrohr 15 zugeführte verschmutzte Wasser strömt von unten nach oben durch die Reinigungsvorrichtung 6 und nachdem ein bestimmter Wasserstand erreicht wurde in eine Rohrrigole bzw. einen Wasserablauf 16. Der Wasserablauf 16 kann entweder das gereinigte Wasser in das Grundwasser oder ein offenes Gewässer abgeben. Das Wasser kann selbstverständlich auch für den Gebrauch im Haus, beispielsweise für die Toilettenspülung oder zum Waschen verwendet werden, wofür der Wasserablauf 16 an das Hauswassersystem angeschlossen werden.

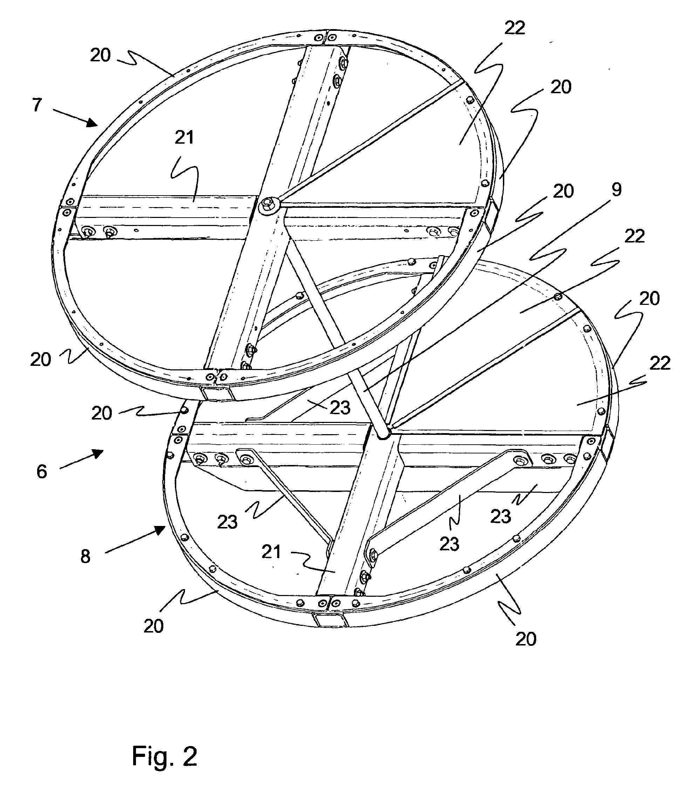

Figur 2 zeigt ein Beispiel einer Reinigungsvorrichtung 6, in perspektivischer Darstellung. Die obere Siebplatte 7 und die untere Siebplatte 8 sind mit dem Abstandhalter 9 beabstandet gehalten. Der Abstandhalter 9 ist eine Stange, welche im Zentrum der beiden Siebplatten 7 und 8 angeordnet ist und mit den Siebplatten 7 und 8 an ihrem jeweiligen Ende beispielsweise mit einer Schraubverbindung verbunden ist. Die obere Siebplatte 7 weist eine Tragkonstruktion aus vier Kreissegmenten 20 und einem Tragkreuz 21 auf. Auf der Tragkonstruktion sind Segmente 22 befestigt, von welchen in der vorliegenden Darstellung aus Übersichtlichkeitsgründen nur ein Segment 22 dargestellt ist. Bei der kompletten Vorrichtung 6 sind acht derartiger Segmente 22 an der oberen Siebplatte 7 angeordnet, so dass die Siebplatte 7 aus den Segmenten 22 gebildet ist. Die Kreissegmente 20, das Tragkreuz 21 und die Segmente 22 sind miteinander verschraubt. Hierdurch ist es ermöglicht, dass sie durch das Mannloch 5 in den Schacht 1 eingeführt und innerhalb des Schachtes 1 montiert werden.

Die Siebsegmente 22 bestehen vorzugsweise aus einem Edelstahlsiebblech mit Öffnungen, welche einerseits das Wasser hindurchtreten lassen und andererseits den Ionenaustauscher zurückhalten. Die Maschenweite der Siebfläche ist daher entsprechend des verwendeten Ionenaustauschers 10 gewählt. Beispielsweise ist eine Maschenweite von kleiner 0,7 mm gewählt.

Die untere Siebplatte 8 ist ebenso wie die obere Siebplatte 7 aufgebaut. Da auf ihr das Gewicht des Ionenaustauschers 10 lastet, weist sie zusätzliche Verstärkungen 23 auf, welche die Tragkonstruktion und die Siebsegmente 22 unterstützen.

Die vorliegende Erfindung ist nicht auf die dargestellten Ausführungsbeispiele beschränkt. Andere Konstruktionen, bei welchen die Platten, zwischen denen der Ionenaustauscher angeordnet ist, aus mehreren Segmenten bestehen und hiermit problemlos in einem Schacht montiert werden können oder in dem Schacht regeneriert werden können, fallen ebenso unter die vorliegende Erfindung. Auch die Reinigung von Regenwasser, das von Straßen oder Parkplätzen abfließt, kann durch das Einbringen von adsorbierendem Material von organischen Verunreinigungen, wie sie beispielsweise von Fahrzeugen stammen, gereinigt werden. Das adsorbierende Material kann zusätzlich oder alternativ zu dem Ionenaustauscher in die erfindungsgemäße Vorrichtung eingebracht werden.

## Patentansprüche

1. Vorrichtung, zum Einbau in einen Schacht (1), zur dezentralen Behandlung von Wasser, insbesondere von Regenwasser, welche zwei voneinander beabstandete, einen Hohlraum bildende Platten (7,8) aufweist, wobei der Hohlraum wenigstens teilweise mit einem lonenaustauscher (10) und/oder einem adsorbierenden Material befüllt ist, **dadurch gekennzeichnet, dass** die Platten (7,8) aus mehreren Segmenten (20,21,22,23) bestehen und beabstandet voneinander befestigt sind.

2. Vorrichtung nach Anspruch 1, **dadurch gekennzeichnet, dass** die Platten (7,8) mit einem Abstandhalter (9) miteinander verbunden sind.

3. Vorrichtung nach einem oder mehreren der vorherigen Ansprüche, **dadurch gekennzeichnet, dass** wenigstens eine der Platten (7,8) eine Siebplatte ist.

4. Vorrichtung nach einem oder mehreren der vorherigen Ansprüche, **dadurch gekennzeichnet, dass** die Platte (7,8) auf einer Tragkonstruktion (21,22,23) gelagert ist.

5. Vorrichtung nach einem oder mehreren der vorherigen Ansprüche, **dadurch gekennzeichnet, dass** die Siebsegmente (22) der Platte (7, 8) und die Tragkonstruktion (21,22,23) miteinander verschraubt sind.

6. Vorrichtung nach einem oder mehreren der vorherigen Ansprüche, **dadurch gekennzeichnet, dass** der Abstand der Platten (7,8) der Höhe des eingefüllten Ionenaustauschers entspricht und vorzugsweise zwischen 50 und 100 cm zueinander einstellbar ist.

7. Vorrichtung nach einem oder mehreren der vorherigen Ansprüche, **dadurch gekennzeichnet, dass** der Abstand der Platten (7,8) durch unterschiedliche Abstandhalter (9) einstellbar ist.

8. Vorrichtung nach einem oder mehreren der vorherigen Ansprüche, **dadurch gekennzeichnet, dass der** Durchmesser der Vorrichtung (6), insbesondere der Platten (7,8), im wesentlichen dem Durchmesser des für den Einbau vorgesehen Schachtes (1) entspricht.

9. Vorrichtung nach einem oder mehreren der vorherigen Ansprüche, **dadurch gekennzeichnet, dass** der lonenaustauscher (10) körnig ausgebildet ist.

10. Vorrichtung nach einem oder mehreren der vorherigen Ansprüche, **dadurch gekennzeichnet, dass** der Ionenaustauscher (10) ein Zeolith, insbesondere ein Klinoptilolith oder Chabasith/Phillipsit ist.

11. Schacht mit einer Vorrichtung gemäß den vorherigen Ansprüchen, **dadurch gekennzeichnet, dass** die Vorrichtung (6) in dem Schacht (1) seitlich, insbesondere mit Silikon, abgedichtet angeordnet ist und wenigstens teilweise mit einem lonenaustauscher (10) und/oder einem adsorbierenden Material befüllt ist.

12. Schacht nach dem vorherigen Anspruch, **dadurch gekennzeichnet, dass** die Vorrichtung (6) zwischen Zu- und Ablauf des Schachtes (1) angeordnet ist zur Durchströmung im Aufstromverfahren.

13. Schacht nach dem vorherigen Anspruch, **dadurch gekennzeichnet, dass** unter der Vorrichtung (6) eine Abtrenneinheit (12) für Partikel angeordnet ist.

14. Schacht nach einem oder mehreren der vorherigen Ansprüche, **dadurch gekennzeichnet, dass** unter der Vorrichtung (6) eine Absaugeinrichtung (13) für Partikel und/oder Regenerierflüssigkeit angeordnet ist.

15. Schacht nach einem oder mehreren der vorherigen Ansprüche, **dadurch gekennzeichnet, dass die** Vorrichtung (6) durch ein Mannloch (5) des Schachtes (1) in den Schacht (1) eingeführt und in dem Schacht (1) zusammengesetzt und befüllt ist.

16. Schacht nach einem oder mehreren der vorherigen Ansprüche, **dadurch gekennzeichnet, dass** am unteren Ende des Schachtes (1) eine tangential in den Schacht (1) mündende Wassereinleitung (15) angeordnet ist.

17. Schacht nach einem oder mehreren der vorherigen Ansprüche, **dadurch gekennzeichnet, dass** an dem Schacht (1) eine Ablaufvorrichtung zum Ablauf des gereinigten Wassers in den Untergrund angeordnet ist.

18. Schacht nach einem oder mehreren der vorherigen Ansprüche, **dadurch gekennzeichnet, dass** die Ablaufvorrichtung Ablaufrohr oder eine Rohrrigole (16) ist.

19. Schacht nach einem oder mehreren der vorherigen Ansprüche, **dadurch gekennzeichnet, dass** die Vorrichtung (6) in einen bestehenden Schacht (1) nachträglich eingebaut ist.

20. Verfahren zur Behandlung von Wasser, insbesondere zur Reduzierung von Schwermetallen in Wasser, insbesondere in Regenwasser aus Dachabläufen, mit einer Vorrichtung (6) und in einem Schacht (1) gemäß den vorherigen Ansprüchen, **dadurch gekennzeichnet, dass** der Ionenaustauscher (10) in dem Schacht (1) regeneriert wird, indem eine Regenerierflüssigkeit von oben nach unten durch die Vorrichtung (6) geströmt wird und unterhalb der Vorrichtung (6) mit Hilfe einer Absaugeinrichtung (13) abgesaugt wird.

21. Verfahren nach einem oder mehreren der vorherigen Ansprüche, **dadurch gekennzeichnet, dass** als Regenerierflüssigkeit eine NaCl-Lösung verwendet wird.

22. Verfahren nach einem oder mehreren der vorherigen Ansprüche, **dadurch gekennzeichnet, dass** der lonenaustauscher (10) vor dem ersten Einsatz in der Vorrichtung insbesondere mit einer Regenerierflüssigkeit vorbehandelt wird.

23. Verfahren nach einem oder mehreren der vorherigen Ansprüche, **dadurch gekennzeichnet, dass** zum Regenerieren des lonenaustauschers (10) Regenerierflüssigkeit mehrmals, insbesondere 2 bis 3 Mal durch die Vorrichtung (6) geströmt wird.

24. Verfahren nach einem oder mehreren der vorherigen Ansprüche, **dadurch gekennzeichnet, dass** das gereinigte Wasser im Untergrund versickert, einer Regenwassernutzung zugeführt oder in einen Vorfluter eingeleitet wird.

## Claims

1. A device for installation in a shaft (1) for local treatment of water, particularly rain water, having two spaced plates (7, 8) that form a cavity that is at least partially filled with an ion exchanger (10) and/or an adsorbent, **characterized in that** the plates (7, 8) are composed of a number of segments (20, 21, 22, 23) and are fastened such that they are separated from one another.

2. Device according to claim 1, **characterized in that** the plates (7, 8) are connected by a spacer (9).

3. Device according to one or more of the preceding claims, **characterized in that** at least one of the plates (7, 8) is a sieve plate.

4. Device according to one or more of the preceding claims, **characterized in that** the plate (7, 8) is mounted on a supporting structure (21, 22, 23).

5. Device according to one or more of the preceding claims, **characterized in that** the sieve segments (22) of the plate (7, 8) and the supporting structure (21, 22, 23) are bolted together.

6. Device according to one or more of the preceding claims, **characterized in that** the separation between the plates (7, 8) equals the height of the ion exchanger that the cavity is filled with and is preferably adjustable between 50 and 100 cm.

7. Device according to one or more of the preceding claims, **characterized in that** the separation between the plates (7, 8) may be adjusted by using different spacers (9).

8. Device according to one or more of the preceding claims, **characterized in that** the diameter of the device (6), in particular of the plates (7, 8), is essentially equal to the diameter of the shaft (1) into which it is to be installed.

9. Device according to one or more of the preceding claims, **characterized in that** the ion exchanger (10) is granular in form.

10. Device according to one or more of the preceding claims, **characterized in that** the ion exchanger (10) is a zeolite, in particular a clinoptilolite or chabasite/phillipsite.

11. Shaft with a device according to the preceding claims, **characterized in that** the device (6) is positioned in the shaft (1) so that it is sealed into place on the sides, in particular with silicon, and is at least partially filled with an ion exchanger (10) and/or an adsorbent.

12. Shaft according to the preceding claim, **characterized in that** the device (6) is positioned between the inlet and outlet of the shaft (1) for perfusion during an upward flow process.

13. Shaft according to the preceding claim, **characterized in that** a separating unit (12) for particles is located below the device (6).

14. Shaft according to one or more of the preceding claims, **characterized in that** a suction device (13) for particles and/or regenerating liquid is located below the device (6).

15. Shaft according to one or more of the preceding claims, **characterized in that** the device (6) is introduced into the shaft (1) through a manhole (5) in the shaft (1) and assembled and filled in the shaft (1).

16. Shaft according to one or more of the preceding claims, **characterized in that** a water inlet (15) introduced tangentially into the shaft (1) is located at the lower end of the shaft (1).

17. Shaft according to one or more of the preceding claims, **characterized in that** a discharge device for discharging the treated water into the subsoil is located in the shaft (1).

18. Shaft according to one or more of the preceding claims, **characterized in that** the discharge device is a drain pipe or a drain pipe in an infiltration trench (16).

19. Shaft according to one or more of the preceding claims, **characterized in that** the device (6) is installed later in an existing shaft (1).

20. A method for treating water, in particular for reducing the heavy metals in water, in particular rainwater from roof drains, which is performed using a device (6) and in a shaft (1) according to the preceding claims, **characterized in that** the ion exchanger (10) in the shaft (1) is regenerated by means of a regenerating liquid which flows from top to bottom through the device (6) and is suctioned away below the device (6) using a suction device (13).

21. Method according to one or more of the preceding claims, **characterized in that** a NaCl solution is used as a regenerating liquid.

22. Method according to one or more of the preceding claims, **characterized in that** the ion exchanger (10) is pretreated before first use, in particular using a regenerating liquid.

23. Method according to one or more of the preceding claims, **characterized in that** the regenerating liquid used to regenerate the ion exchanger (10) flows through the device (6) more than once, in particular 2 to 3 times.

24. Method according to one or more of the preceding claims, **characterized in that** the treated water is allowed to seep into the subsoil, or is channeled to a location where the rainwater is used, or into a discharge system.

## Revendications

1. Dispositif destiné à l'incorporation dans un puits (1) pour le traitement de l'eau, particulièrement de l'eau de pluie, lequel comporte deux plaques (7, 8) distancées l'un de l'autre et formant un espace vide, sachant que ledit espace vide est rempli au moins partiellement d'un échangeur d'ions (10) et/ou d'une matière absorbante, **caractérisé en ce que** les plaques (7, 8) se composent de plusieurs segments (20, 21, 22, 23) et qu'elles sont fixées à une certaine distance les unes des autres.

2. Dispositif selon la revendication 1, **caractérisé en ce que** les plaques (7, 8) sont assemblées les unes aux autres avec une cale d'espacement (9).

3. Dispositif selon l'une quelconque ou plusieurs des revendications précédentes, **caractérisé en ce que** l'une des plaques (7, 8) au moins est une plaque perforée.

4. Dispositif selon l'une quelconque ou plusieurs des revendications précédentes, **caractérisé en ce que** la plaque (7, 8) est fixée sur une construction porteuse (21, 22, 23).

5. Dispositif selon l'une quelconque ou plusieurs des revendications précédentes, **caractérisé en ce que** les segments perforés (22) de la plaque (7, 8) et la construction porteuse (21, 22, 23) sont boulonnés l'un à l'autre.

6. Dispositif selon l'une quelconque ou plusieurs des revendications précédentes, **caractérisé en ce que** la distance entre les plaques (7, 8) correspond à la hauteur de l'échangeur d'ions versé et qu'elle est ajustable de préférence entre 50 cm et 100 cm de l'une à l'autre.

7. Dispositif selon l'une quelconque ou plusieurs des revendications précédentes, **caractérisé en ce que** la distance entre les plaques (7, 8) est ajustable au moyen de cales d'espacement (9) différentes.

8. Dispositif selon l'une quelconque ou plusieurs des revendications précédentes, **caractérisé en ce que** le diamètre du dispositif (6), particulièrement des plaques (7, 8), correspond essentiellement au diamètre du puits (1) prévu pour l'incorporation.

9. Dispositif selon l'une quelconque ou plusieurs des revendications précédentes, **caractérisé en ce que** l'échangeur d'ions (10) se présente sous forme granulée.

10. Dispositif selon l'une quelconque ou plusieurs des revendications précédentes, **caractérisé en ce que** l'échangeur d'ions (10) est un zéolithe, particulièrement un clinoptilolithe ou un chabasithe/phillipsite.

11. Puis avec un dispositif selon les revendications précédentes, **caractérisé en ce que** le dispositif (6) est disposé dans le puits (1) latéralement, étanchéifié particulièrement au silicone, et qu'il est rempli au moins partiellement d'un échangeur d'ions (10) et/ou d'une matière absorbante.

12. Puits selon la revendication précédente, **caractérisé en que** le dispositif (6) est implanté entre l'entrée et la sortie du puits (1) pour sa traversée selon la méthode du courant ascendant.

13. Puits selon la revendication précédente, **caractérisé en qu'**une unité de séparation (12) des particules est disposée sous le dispositif (6).

14. Puits selon l'une quelconque ou plusieurs des revendications précédentes, **caractérisé en qu'**un dispositif d'aspiration des particules (13) et/ou un liquide de régénération est (sont) disposé(s) sous le dispositif (6).

15. Puits selon l'une quelconque ou plusieurs des revendications précédentes, **caractérisé en ce que** le dispositif (6) est introduit dans le puits (1) à travers un trou d'homme (5) dudit puits (1) et qu'il est assemblé et rempli dans le puits (1).

16. Puits selon l'une quelconque ou plusieurs des revendications précédentes, **caractérisé en ce qu'**une introduction d'eau (15) débouchant tangentiellement dans le puits (1) est disposée à l'extrémité inférieure du puits (1).

17. Puits selon l'une quelconque ou plusieurs des revendications précédentes, **caractérisé en ce qu'**un dispositif d'écoulement pour l'écoulement de l'eau épurée dans le sous-sol est disposé au puits (1).

18. Puits selon l'une quelconque ou plusieurs des revendications précédentes, **caractérisé en ce que** le dispositif d'écoulement est une conduite de décharge ou une rigole en conduite (16).

19. Puits selon l'une quelconque ou plusieurs des revendications précédentes, **caractérisé en ce que** le dispositif (6) est incorporé ultérieurement dans un puits (1) existant.

20. Procédé pour le traitement de l'eau, particulièrement pour la réduction des métaux lourds dans l'eau, particulièrement dans l'eau de pluie provenant des décharges de toitures, avec un dispositif (6) et dans un puits (1) selon les revendications précédentes, **caractérisé en ce que** l'échangeur d'ions (10) est régénéré dans le puits (1) en ce sens qu'un liquide de régénération est mis en circulation dans le dispositif (6) du haut vers le bas et qu'il est aspiré sous le dispositif (6) au moyen d'un dispositif d'aspiration (13).

21. Procédé selon l'une quelconque ou plusieurs des revendications précédentes, **caractérisé en ce que** le liquide de régénération utilisé est une solution de NaCl.

22. Procédé selon l'une quelconque ou plusieurs des revendications précédentes, **caractérisé en ce que** l'échangeur d'ions (10) est prétraité particulièrement au moyen d'un liquide de régénération avant sa première utilisation dans le dispositif.

23. Procédé selon l'une quelconque ou plusieurs des revendications précédentes, **caractérisé en ce que** pour la régénération de l'échangeur d'ions (10), le liquide de régénération est mis en circulation plusieurs fois, particulièrement 2 à 3 fois, à travers le dispositif (6).

24. Procédé selon l'une quelconque ou plusieurs des revendications précédentes, **caractérisé en ce que** l'eau épurée s'infiltre dans le sous-sol, est acheminée à l'exploitation de l'eau de pluie ou qu'elle introduite dans un cours d'eau récepteur.
